(19) Europäisches Patentamt
European Patent Office
Office européen des brevets

(11) EP 4 524 166 B1

(12) EUROPEAN PATENT SPECIFICATION

(45) Date of publication and mention of the grant of the patent:
**03.06.2026 Bulletin 2026/23**

(21) Application number: **23197031.0**

(22) Date of filing: **13.09.2023**

(51) International Patent Classification (IPC):
***C08L 23/14*** *(2006.01)* ***C08K 5/098*** *(2006.01)*
***C08F 210/06*** *(2006.01)* ***C08F 2/00*** *(2006.01)*

(52) Cooperative Patent Classification (CPC):
(C-Sets available)
**C08K 5/0083;** C08L 2203/10; C08L 2205/025;
C08L 2314/02 (Cont.)

# (54) POLYPROPYLENE COMPOSITION FOR INJECTION MOLDED ARTICLES

POLYPROPYLENZUSAMMENSETZUNG FÜR SPRITZGUSSARTIKEL

COMPOSITION DE POLYPROPYLÈNE POUR ARTICLES MOULÉS PAR INJECTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.03.2025 Bulletin 2025/12**

(73) Proprietors:
- **Abu Dhabi Polymers Co. Ltd (Borouge) - Sole Proprietorship L.L.C.**
  **Abu Dhabi (AE)**
- **Borealis GmbH**
  **1020 Vienna (AT)**

(72) Inventors:
- **KUMAR DAS, Subrata**
  **Abu Dhabi (AE)**
- **VERMA, Jagmohan**
  **Abu Dhabi (AE)**
- **VAN CAUWENBERGHE, Hans Jozef Francois**
  **Abu Dhabi (AE)**
- **AL KINDI, Zayed**
  **Abu Dhabi (AE)**
- **SOBOH, Mohammed**
  **Abu Dhabi (AE)**

(74) Representative: **Maiwald GmbH**
**Elisenhof**
**Elisenstraße 3**
**80335 München (DE)**

(56) References cited:
**EP-A1- 3 617 238** **US-A1- 2020 181 379**
**US-B2- 10 266 671**

EP 4 524 166 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/651;**
**C08F 210/06, C08F 4/6543;**
**C08L 23/142, C08L 23/142;**
**C08L 23/142, C08L 23/142, C08K 5/098;**
**C08L 23/142, C08L 23/142, C08L 23/20, C08K 5/098;**
**C08L 23/142, C08L 23/20, C08K 5/098;**
C08F 210/06, C08F 210/16, C08F 2500/04, C08F 2500/05, C08F 2500/12, C08F 2500/27, C08F 2500/30, C08F 2500/31, C08F 2500/33, C08F 2500/34

## Description

Injection molded parts for containers and injection molded articles, such as thin wall packaging applications (e.g. food and medical packaging and plastic cups), polypropylene (PP) compounds and automotive applications (e.g. car interior parts, engine casings, car exterior parts etc.) have specific requirements on the polymeric materials employed to produce these articles.

For the mass production of injection molded articles from PP in these different applications, the materials have to have good processability with low cycle times and also must have sufficient stiffness/impact balance to achieved the desired firmness and integrity of the final injection molded article. The materials for food and medical packaging articles should also have good organoleptic properties, and in some applications good optical properties are also desired.

A high melt flow rate (MFR) of polypropylene is needed for the above purposes, but an increase in MFR will also increase the stiffness, while at the same time compromising the impact strength properties.

Increasing the content of ethylene as a comonomer, like in a random copolymer of propylene and ethylene, can improve the impact strength, like the Charpy notched impact strength, but at the same time it will reduce the stiffness, heat resistance (HDT), and has a detrimental effect on the crystallization behavior (low crystallization temperature).

There is a need for improved PP compositions which have improved flowability (suitable for large size molded articles), also having a desirable impact/stiffness balance with improved HDT and simultaneously good color stability and organoleptic properties. The latter requirement practically excludes the application of visbroken grades, i.e. polymers for which the MFR has been increased in a radical-based controlled degradation process. Accordingly it is in particular an object of the present invention to provide a polypropylene with high flowability and at the same time keeping impact properties and optical properties on a high level.

It has now been surprisingly found that propylene ethylene random copolymer compositions comprising a monophasic propylene ethylene random copolymer and a combination of a polymeric and a particulate nucleating agent lead to nucleated propylene ethylene random copolymer compositions having improved mechanical, optical and organoleptic properties.

## Summary of the invention

The present invention relates to an $\alpha$-nucleated propylene ethylene random copolymer composition, comprising:

a) a monophasic propylene ethylene random copolymer (R-PP) having

- an ethylene content (C2), as determined by $^{13}$C-NMR spectroscopy, in the range of 0.5 to 5.0 wt.-%, more preferably in the range of 0.6 to 4.0 wt.- %, most preferably in the range of 0.6 to 2.5 wt.-%, based on the total weight of the propylene ethylene random copolymer,
- a melt flow rate $MFR_2$ (230 °C) measured according to ISO 1133 in the range of 20 to 500 g/10min, preferably 30 to 300 g/10min, more preferably in the range of 35 to 200 g/10min; and

b) at least two nucleating agents (NU), wherein

- one of the at least two nucleating agents is a vinylcycloalkane polymer (NU1), preferably is poly(vinylcyclopentane) (pVCP) or poly(vinylcyclohexane) (pVCH), more preferably is poly(vinylcyclohexane) (pVCH) and
- the other of the at least two nucleating agents (NU2) comprises the salt of a bridged or unbridged cyclohexane dicarboxylic acid represented by Formula (I-a) or (I-b):

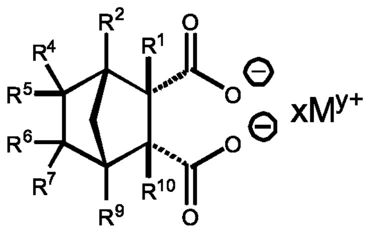
(I-a)
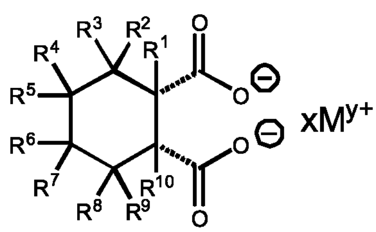
(I-b),

wherein x is either 1 or 2, y is either 1 or 2, x*y is 2, and wherein for y = 1, M is an alkali metal, and for y=2, M is an alkaline earth metal; and wherein $R^1$ to $R^{10}$ are independently a hydrogen atom, an alkyl group having 1 to 9 carbon atoms, a hydroxyl group, an alkoxy group having 1 to 9 carbon atoms, an amino group, an alkylamine group having 1 to 9 carbon atoms, a halogen atom, a phenyl group, or a group represented by the formula R-(R'-O)$_n$-, R being an alkyl group

having 1 to 3 carbon atoms, R' being an alkylene group having 2 or 3 carbon atoms, and n being an integer of 1 to 4; and any two alkyl groups of $R^1$ to $R^{10}$ may be linked to each other, thereby forming a carbon ring having 3 to 6 carbon atoms.

The invention further relates to an injection molded article, preferably a thin-walled injection molded article or a polypropylene (PP) compound for automotive applications having low VOC (e.g. car interior parts, engine casings, car exterior parts etc.), comprising the inventive $\alpha$-nucleated propylene ethylene copolymer composition. Therefore, in one specific embodiment of the present invention is directed to an injection molded article, like a thin wall packaging element, comprising the propylene copolymer (R- PP) of the present invention. More preferably the present invention is directed to a thin wall packaging element selected from the group consisting of cups, boxes, trays, pails, buckets, bowls, lids, flaps, caps, CD covers, and DVD covers, wherein said thin wall packaging element comprises the propylene copolymer (R-PP) of the present invention.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and aspecting the present invention, the following terminology will be used in accordance with the definitions set out below.

Unless clearly indicated otherwise, use of the terms "a", "an", and the like refers to one or more.

A propylene ethylene random copolymer, i.e. the monophasic propylene ethylene random copolymer (R-PP) according to this invention, is a copolymer consisting of propylene units and ethylene units, in which the comonomer units, i.e. the ethylene units, are distributed randomly over the polymeric chain.

Typical for monophasic propylene ethylene copolymers is the presence of only one glass transition temperature. In other words the monophasic propylene ethylene copolymer according to this invention does not comprise polymer components which are not miscible with each other as it is the case for heterophasic propylene copolymers. In contrast to monophasic systems heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and is not part of the present invention. The presence of second polymer phases or the so called inclusions are for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

**Detailed Description**

<u>Monophasic propylene ethylene random copolymer (R-PP)</u>

The main component of the $\alpha$-nucleated propylene ethylene random copolymer composition is a monophasic propylene-ethylene random copolymer (R-PP).

The monophasic propylene-ethylene random copolymer (R-PP) has an ethylene content, as determined by $^{13}C$-NMR spectroscopy, in the range of 0.5 to 5.0 wt.-%, more preferably in the range of 0.6 to 4.0 wt.-%, most preferably in the range of 0.6 to 2.5 wt.-%.

One essential requirement of the inventive polypropylene composition is its high melt flow rate. The melt flow rate mainly depends on the average molecular weight. This is due to the fact that long molecules render the material a lower flow tendency than short molecules.

The monophasic propylene-ethylene random copolymer (R-PP) of the invention has a melt flow rate $MFR_2$ (230 °C) measured according to ISO 1133 in the range of 20 to 500 g/10min, preferably in the range of 30 to 300 g/10min, more preferably in the range of 35 to 200 g/10min.

Preferably, the monophasic propylene-ethylene random copolymer (R-PP) has 2,1-regio-defects, measured by quantitative $^{13}C$-NMR, of less than 0.4 mol-%, preferably 0.0 to 0.2 mol-%, still more preferably is free from 2,1-regiodefects, i.e. no 2,1-regiodefects are detectable.

The term "2,1 regio defects" as used in the present invention defines the sum of 2,1 erythro regio-defects and 2,1 threo regio-defects.

The low amount and the absence, respectively, of 2,1-regiodefects in a monophasic propylene-ethylene random copolymer (R-PP) is indicative that the monophasic random propylene-ethylene copolymer (R-PP) has been polymerized in the presence of a Ziegler-Natta catalyst system (ZN).

Preferably, the monophasic propylene-ethylene random copolymer (R-PP) is a multimodal monophasic propylene ethylene random copolymer (R-PP) in view of the ethylene content comprising at least two propylene ethylene random copolymer fractions (A) and (B), wherein the combined amount of the two propylene ethylene random copolymer fractions (A) and (B) is at least 90 wt.-%, preferably in the range of 95 to 100 wt.-%, based on the total weight of the propylene ethylene random copolymer (R-PP).

Accordingly, it is preferred, that the multimodal R-PP is a bimodal R-PP, i.e. consists of the two propylene ethylene random copolymer fractions (A) and (B).

In the case that the monophasic propylene ethylene random copolymer (R-PP) is a multimodal monophasic propylene ethylene random copolymer (R-PP), the ethylene content of the first propylene ethylene random copolymer fraction (A) is in the range of 0.1 to 1.5 wt.-%, more preferably in the range of 0.3 to 1.2 wt.-%, and the ethylene content of the second propylene copolymer fraction (B) is in the range of 0.8 to 2.5 wt.-%, more preferably in the range of 1.0 to 2.0 wt.-%. Preferably, the ethylene content of the first propylene ethylene random copolymer fraction (A) is lower than the ethylene content of the second propylene copolymer fraction (B), and more preferably the ethylene content of the first propylene ethylene random copolymer fraction (A) is at least 0.2 wt.-%, even more preferably 0.2 to 2.0 wt.-%, yet more preferably 0.3 to 1.5 wt.-%, lower than the ethylene content of the second propylene copolymer fraction (B).

The weight ratio between the first propylene ethylene random copolymer fraction (A) and the second propylene ethylene random copolymer fraction (B) is in the range of 40:60 to 60:40.

The ratio of the comonomer content of the first propylene ethylene random copolymer fraction (A) to the comonomer content of the second propylene ethylene random copolymer fraction (B) may be 0.45 to 0.85, more preferably 0.50 to 0.80, even more preferably 0.55 to 0.75.

The monophasic propylene-ethylene random copolymer (R-PP) preferably has a xylene cold soluble content (XCS), as determined according to ISO 16152, of less than 4.0 wt.-%, preferably in the range from 0.5 to 3.5 wt.-%, more preferably in the range from 1.0 to 3.0 wt.-%, most preferably in the range from 1.5 to 2.7 wt.-%.

Preferably, the monophasic propylene ethylene random copolymer (R-PP) is non-visbroken, more preferably is a reactor-made monophasic propylene ethylene random copolymer; and/or does not contain peroxide(s) or decomposition products of peroxide(s).

Since there is no need for a visbreaking step, the organoleptic properties of the inventive composition can be improved.

The monophasic propylene ethylene random copolymer (R-PP) preferably has a molecular weight distribution (MWD) determined by gel permeation chromatography according to ISO 16014-4:2003 and ASTM D 6474-99, of at least 5.0, preferably in the range of 6.0 to 10.0, more preferably in the range of 6.5 to 9.5.

The $\alpha$-nucleated propylene ethylene random copolymer composition may comprise further (polymer) components.

However, the monophasic propylene ethylene random copolymer (R-PP) as described above is the main component of the inventive $\alpha$-nucleated propylene ethylene random copolymer composition.

Accordingly, it is preferred that the amount of the monophasic propylene ethylene random copolymer (R-PP) is more than 85 wt.-%, preferably in the range of 90 to 99.9 wt.-%, more preferably in the range of 95 to 99.9 wt.-%, based on the total weight of the propylene ethylene random copolymer composition.

Nucleating Agents

The inventive propylene ethylene random copolymer composition further comprises at least two nucleating agents (NU).

From these at least two nucleating agents, one is a vinylcycloalkane polymer (NU1). Polymeric nucleating agents can either be accomplished by a special reactor technique, where the catalyst is prepolymerised with monomers like e.g. vinylcyclohexane (VCH), or by blending the polypropylene composition with the vinylcycloalkane polymer. These methods are described in greater detail in e.g. EP 0 316 187 A2, WO 99/24479 and EP 2 960 279 A1.

It is preferred that the polymeric nucleating agent (NU1) is accomplished by prepolymerizing the catalyst system, preferably Ziegler-Natta catalyst system with monomers of the vinylcycloalkane polymer before using the catalyst system in the polymerization of the propylene ethylene random copolymer (R-PP).

The polymeric nucleating agent vinylcycloalkane polymer (NU1) is preferably poly(vinylcyclopentane (pVCP) or poly(vinylcyclohexane) (pVCH). Even more preferably, the polymeric nucleating agent vinylcycloalkane polymer (NU1) is poly(vinylcyclohexane) (pVCH).

The amount of the vinylcycloalkane polymer (NU1) in the composition is preferably in the range of 0.1 to 2000 ppm, preferably 1.0 to 1000 ppm, based on the total weight of the propylene ethylene random copolymer composition.

Besides the polymeric nucleating agent (NU1), the inventive propylene ethylene random copolymer composition further comprises a particulate nucleating agent (NU2).

The particulate nucleating agent (NU2) according to the invention comprises the salt of a bridged or unbridged cyclohexane dicarboxylic acid represented by Formula (I-a) or (I-b):

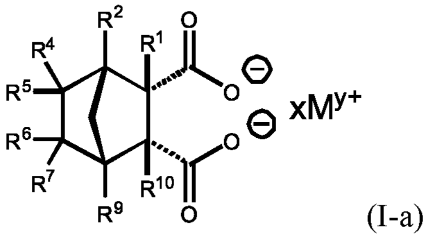
(I-a)
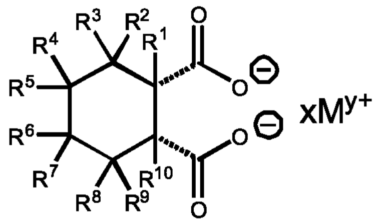
(I-b),

wherein x is either 1 or 2, y is either 1 or 2, x*y is 2, and wherein for y = 1, M is an alkali metal, and for y=2, M is an alkaline earth metal; and wherein $R^1$ to $R^{10}$ are independently a hydrogen atom, an alkyl group having 1 to 9 carbon atoms, a hydroxyl group, an alkoxy group having 1 to 9 carbon atoms, an amino group, an alkylamine group having 1 to 9 carbon atoms, a halogen atom, a phenyl group, or a group represented by the formula $R-(R'-O)_n-$, R being an alkyl group having 1 to 3 carbon atoms, R' being an alkylene group having 2 or 3 carbon atoms, and n being an integer of 1 to 4; and any two alkyl groups of $R^1$ to $R^{10}$ may be linked to each other, thereby forming a carbon ring having 3 to 6 carbon atoms.

In order to equalize the negative charge of the dicarboxylate, x*y has to be 2 in the counter ion $xM^{y+}$.

Alkali metals can be used for M when y= 1 and alkaline earth metals for M when y=2.

Preferred alkali metals are lithium, sodium and potassium, more preferred sodium in Formula (I-a).

Preferred alkaline earth metals are magnesium, calcium, strontium, and barium, more preferred calcium in Formula (I-b).

It is preferred that the nucleating agent (NU2) comprises the salt of an unbridged cyclohexane dicarboxylic acid represented by Formula (I-b).

The counter ion $xM^{y+}$ is preferably the ion of an alkaline earth metal. It is therefore preferred that x is 1 and y is 2 in Formula (I-a) or Formula (I-b).

It is preferred, that the counter ion $xM^{y+}$ is selected from the alkaline earth metals magnesium, calcium, strontium, or barium, most preferably is calcium.

Preferably, all $R^1$ to $R^{10}$ are hydrogen atoms.

In a preferred embodiment, the nucleating agent (NU2) comprises an alkaline earth metal salt, more preferably the calcium salt of cis-1,2-cyclohexanedicarboxylic acid represented by Formula (II)

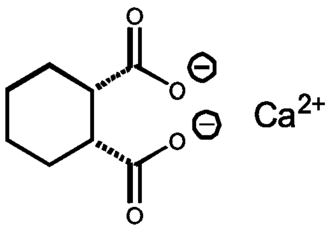
(II).

It is further preferred, that the nucleating agent (NU2) comprises the salt of a bridged or unbridged cyclohexane dicarboxylic acid as the major component. Therefore it is preferred that the nucleating agent (NU2) comprises the salt of a bridged or unbridged cyclohexane dicarboxylic acid represented by Formula (I-a) or (I-b) in an amount of ≥ 50 wt.-%, more preferably in the range of 50 to 100 wt.-%, even more preferably in the range of 50 to 80 wt.-%, based on the total weight of the nucleating agent (NU2).

In certain embodiments of the invention, the nucleating agent (NU2) further comprises a metal stearate, like zinc stearate, in an amount of ≤ 50 wt.-%, preferably in the range of 20 to 45 wt.-%, more preferably in the range of 25 to 40 wt.-%, based on the total weight of the nucleating agent (NU2).

The particulate nucleating agent (NU2) according to the invention comprising the salt of a bridged or unbridged cyclohexane dicarboxylic acid represented by Formula (I-a) or (I-b) may be the commercial nucleating agent HPN600ei available from Milliken containing the calcium salt of cis-1,2-cyclohexanedicarboxylic acid as the main component in ≥ 50 wt.-% and zinc stearate as a side component in ≤ 40 wt.-%.

The amount of the particulate nucleating agent (NU2) comprising the salt of a bridged or unbridged cyclohexane dicarboxylic acid represented by Formula (I-a) or (I-b) is preferably in the range of 20 to 1000 ppm, preferably 50 to 500 ppm, based on the total weight of the propylene ethylene random copolymer composition.

The propylene ethylene random copolymer composition may comprise further nucleating agents.

However, it is preferred that the propylene ethylene random copolymer composition does not comprise further polymeric or particulate nucleating agents, more preferably does not comprise any further nucleating agents.

The combined amount of the propylene ethylene random copolymer (R-PP) and the at least two nucleating agents (NU) is preferably more than 90 wt.-%, more preferably in the range of 95.0 to 99.9 wt.-%, even more preferably in

the range of 97.0 to 99.9 wt.-%, based on the total weight of the propylene ethylene random copolymer composition.

α-Nucleated propylene ethylene random copolymer composition

The combination of the polymeric nucleating agent (NU1) and the particulate nucleating agent (NU2) surprisingly leads to an α-nucleated propylene ethylene random copolymer composition having improved mechanical, optical and organoleptic properties.

To obtain especially good results, the inventive composition may have one or more of the following characteristics.

It is preferred that not only the propylene ethylene random copolymer (R-PP) is monophasic but also that the propylene ethylene random copolymer composition is monophasic.

The composition preferably has a melt flow rate $MFR_2$ (230 °C) measured according to ISO 1133 in the range of 20 to 500 g/10min, preferably in the range of 30 to 300 g/10min, more preferably in the range of 35 to 200 g/10min.

The xylene soluble content (XS) of the composition, determined at 25 °C according to ISO 16152, is preferably less than 4.0 wt.-%, more preferably in the range of 0.5 to 3.5 wt.-%, yet more preferably in the range of 1.0 to 3.0 wt.-%, still yet more preferably in the range of 1.5 to 2.7 wt.-%.

The composition preferably has a crystallization temperature Tc measured by differential scanning calorimetry (DSC) of at least 123 °C, more preferably in the range of 124°C to 135°C.

The melting Temperature Tm measured by differential scanning calorimetry (DSC) of the composition is preferably at least 153 °C, more preferably in the range of 153°C to 160 °C, yet more preferably in the range of 155.5 to 159.0 °C.

The composition preferably has a heat deflection Temperature (HDT), measured on injection molded bar test specimens of 80×10×4 $mm^3$ prepared in accordance with ISO 19069-2 using a melt temperature of 200 °C, of more than 110 °C, more preferably in the range of 112 °C to 125 °C.

The α-nucleated propylene ethylene random copolymer composition according to the invention has improved mechanical properties. Accordingly the tensile modulus is improved while keeping the Charpy notched impact strength (NIS) value at the same level.

The composition preferably has a tensile modulus, determined according to ISO 527-1,-2 at 1 mm/min and 23°C, of more than 1800 MPa, preferably in the range of 1800 MPa to 2200 MPa.

The advantageous balance between Charpy impact and, respectively, stiffness properties of the inventive composition is expressed herein as the ratio of tensile modulus to the Charpy notched impact strength (NIS).

The ratio of the tensile modulus to the Charpy notched impact strength (NIS) at 23 °C, determined according to ISO 179 using 80×10×4 $mm^3$ test bars injection-moulded in line with ISO 19069-2, may fulfil the equation (a)

$$\frac{Tensile\ modulus}{NIS} \geq 850 \frac{MPa\ m^2}{kJ} \qquad (a).$$

Besides the improved mechanical properties, the inventive α-nucleated propylene ethylene random copolymer composition also shows improved optical properties. Accordingly, the haze value determined according to ASTM D1003-07 on plaques with dimensions 60×60×1 $mm^3$ is preferably less than 70 %, more preferably less than 65 %, like in the range of 30 to 65%.

The yellowness index, measured according to ASTM E313 on plaques with dimensions 60×60×2 $mm^3$ is also preferably less than or equal to 6.0, more preferably in the range of 0.1 to 6.0, even more preferably 0.1 to 5.5.

The individual components used for the inventive α-nucleated propylene ethylene random copolymer composition are known by the person skilled in the art and thus can be readily produced by the information provided herein.

In the following a non-limiting example of the preparation for the inventive nucleated propylene ethylene random copolymer composition is described in more detail.

A Ziegler-Natta catalyst is modified by polymerizing the catalyst with vinylcyclohexane monomers, thereby forming a poly(vinylcyclohexane)-modified Ziegler-Natta catalyst. The respective process is described in EP 1 028 984, EP 1 183 307 and EP 2 960 279. Afterwards, propylene and optional ethylene are polymerized in the presence of the modified Ziegler-Natta catalyst in a pre-polymerization reactor. This pre-polymerized, modified catalyst composition is then used in the preparation of the propylene ethylene random copolymer. Fraction (A) is prepared by polymerizing, in a slurry reactor, for example a loop reactor, propylene together with the ethylene comonomer in the presence of the prepolymerized Ziegler-Natta catalyst composition. However polymerization of fraction (A) can be achieved in the slurry reactor without applying any prepolymerzation setp. Accordingly, the first propylene ethylene random copolymer fraction (A) according to this invention is the polymer obtained after slurry reactor.

This fraction (A) is then transferred to a subsequent gas phase reactor, wherein in the gas phase reactor propylene is reacted in the presence of ethylene in order to produce the propylene ethylene random copolymer fraction (B)

in the presence of the propylene ethylene random copolymer fraction (A). This reaction sequence provides a reactor blend of fraction (A) and fraction (B) constituting the monophasic propylene ethylene random copolymer (R-PP). The above-discussed process, comprising at least two polymerization steps, is advantageous in view of the fact that it provides easily controllable reaction steps enabling the preparation of a desired reactor blend. The polymerization steps may be adjusted, for example by appropriately selecting monomer feed, comonomer feed, hydrogen feed, temperature and pressure in order to suitably adjust the properties of the polymerization products obtained. It is in particular possible to obtain a multimodality, preferably the bimodality, of the propylene ethylene random copolymer with respect to the ethylene distribution as well as with respect to the molecular weights and $MFR_2$ (230 °C) values during said multistage polymerization procedures.

Such a process can be carried out using any suitable Ziegler-Natta catalyst for the preparation of the monophasic propylene ethylene random copolymer (R-PP). Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843.

Suitable external donors are the known silane-based donors, such as dicyclopentyl dimethoxy silane or cyclohexyl methyldimethoxy silane.

The described process can be for example a loop-gas phase process, such as developed by Borealis, known as Borstar® technology, described for example in EP 0 887 379 A1 and WO 92/12182.

With respect to the above-mentioned preferred slurry-gas phase process, the following general information can be provided with respect to the process conditions.

Temperature of from 40 to 110 °C, preferably between 60 and 100 °C, in particular between 70 and 90 °C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50 to 130 °C, more preferably 80 to 100 °C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the monophasic propylene ethylene random copolymer (R-PP) produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

The monophasic propylene ethylene random copolymer (R-PP) obtained in a process as described above, can subsequently be compounded with nucleating agents, e.g. the particulate nucleating agent (NU2), and other additives in order to obtain the inventive $\alpha$-nucleated propylene ethylene random copolymer composition comprising the R-PP, NU1 and NU2.

Injection molded article

Further the present invention is directed to injection molded articles. The $\alpha$-nucleated propylene ethylene random copolymer composition described above has excellent properties to be used in injection molding articles.

While the injection molded article may comprise other components, it is preferred that the article essentially consists of the $\alpha$-nucleated propylene ethylene random copolymer composition as described above.

Due to the excellent mechanical, optical and organoleptic properties of the inventive propylene ethylene random copolymer composition, it can be injection molded into a thin wall packaging container. In one specific embodiment, an injection molded article, like a thin wall packaging element, selected from the group consisting of cups, boxes, trays, pails, buckets, bowls, lids, flaps, caps, CD covers, and DVD covers, wherein said thin wall packaging element comprises the propylene copolymer (R-PP) of the present invention.

Due to the high $MFR_2$ of the inventive propylene ethylene random copolymer composition and its superior stiffness / toughness balance, it can be used for various automotive applications like car interior parts, engine casings, car exterior parts, etc., because it can fulfill all the specific requirements on the employable polymeric materials to produce these articles.

**Measuring methods:**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

**The xylene soluble fraction at room temperature (XS, wt.-%)**

The amount of the polymer soluble in xylene is determined at 25 °C according to ISO 16152; 5$^{th}$ edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step.

**Flexural Modulus**

The Flexural properties are determined according to ISO 178 method A (3-point bending test) on 80 mm × 10 mm × 4 mm specimens. Following the standard, a test speed of 2 mm/min and a span length of 16 times the thickness was used. The testing temperature was 23±2 ° C. Injection molding was carried out according to ISO 19069-2 using a melt temperature of 200 °C for all materials irrespective of material melt flow rate.

**Tensile Modulus, tensile strength, tensile stress**

The tensile properties are determined on injection moulded dogbone specimens prepared in accordance with ISO 527-2. Tensile modulus was determined according to ISO 527-1,-2 at 1 mm/min and 23°C. To determine stress at yield and strain at yield, a speed of 50 mm/min. was used.

**Notched impact strength (NIS)**

The Charpy notched impact strength (NIS) was measured according to ISO 179 1eA at +23°C, using injection moulded bar test specimens of 80×10×4 $mm^3$ prepared in accordance with ISO 19069-2 using a melt temperature of 200 °C for all materials irrespective of material melt flow rate.

**Number average molecular weight ($M_n$), weight average molecular weight ($M_w$), and molecular weight distribution (MWD)**

Molecular weight averages (Mw, Mn), and the molecular weight distribution (MWD), i.e. the Mw/Mn (wherein Mn is the number average molecular weight, Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 µl. of sample solution were injected per analysis. The column set was calibrated using universal calibration (according to ISO 16014-2:2003) with at least 15 narrow MWD polystyrene (PS) standards in the range from 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimized 10 mm extended temperature probe head at 125°C using nitrogen gas for all pneumatics. Approximately 200 mg of material was dissolved in 3 ml of *1,2*-tetrachloroethane-$d_2$ (TCE-$d_2$) along with

chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bilevel WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (\, mmmm \;/\; \text{sum of all pentads}\,)$$

The presence of 2,1 erythro regio defects was indicated by the presence of the two methyl sites at 17.7 and 17.2 ppm and confirmed by other characteristic sites. Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\, I_{e6} + I_{e8}\,) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\,mol\% = 100 * (\, P_{21e} / P_{total}\,)$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the

influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Calculation** of comonomer content of the second propylene-ethylene random copolymer fraction (B):

$$\frac{C2\ \ (R-PP) -\ w(PP1) \times\ C2(PP1)}{w(PP2)} = C2(PP2)$$

wherein

| | |
|---|---|
| w(PP1) | is the weight fraction [split wt%] of the first propylene-ethylene random copolymer fraction (A), |
| w(PP2) | is the weight fraction [split wt %] of second propylene-ethylene random copolymer fraction (B), |
| C2(PP1) | is the comonomer content [in wt-%] of the first propylene-ethylene random copolymer fraction (A), |
| C2(R-PP) | is the comonomer content [in wt-%] of the monophasic propylene-ethylene random copolymer composition (R-PP), |
| C2(PP2) | is the calculated comonomer content [in wt-%] of the second propylene-ethylene random copolymer fraction (B). |

**Heat deflection temperature (HDT):**

The heat deflection temperature is measured on using injection molded bar test specimens of 80×10×4 mm³ prepared in accordance with ISO 19069-2 using a melt temperature of 200 °C for all materials irrespective of material melt flow rate. The injection molded specimens are placed in a heating bath. The specimens were loaded in a three point bending set-up aiming for an outer fiber stress of 0.45 MPa or 1.82 MPa. The temperature of the bath is raised at a constant heating rate of 120 °C/h until an outer fiber strain reaches 0.2%. The temperature at which this level of deformation is reached is the heat deflection temperature of the material.

**Spiral flow properties**

Spiral Test is carried out using an Engel VC330/60 cc154 injection molding apparatus with a spiral mold and pressure of 600, 1000 or 1400 bar

screw diameter: 35 mm
max.swept volume: 154 $cm^3$
spec. injection pressure: 600, 1000, or 1400 bar
tool form: oval form; provided by Axxicon; thickness 1 mm, breadth: 5 mm temperature in pre-chamber and die: 230°C
temperature in zone 1/ zone 2/zone 3/zone 4/zone 5: 230°C/ 230°C/230°C/225°C/200°C
melt temperature: 220°C
injection cycle: injection time including holding: 10 s
cooling time: 15 s
injection pressure: Follows from the predetermined length of the testing material. dwell pressure = injection pressure
screw speed: 30 rpm
system pressure: 10 bar
metering path: should be chosen so that the screw stops 20 mm before its final position at the end of the dwell pressure.
tool temperature: 40°C

The spiral flow length can be determined immediately after the injection operation. **Haze** was determined according to ASTM D1003-07 on plaques with dimensions 60×60×0.5 $mm^3$, 60×60×1 $mm^3$ or 60×60×2 $mm^3$ from injection-molded plaques prepared at 220 °C according to ISO19069-2.

**Gloss** was determined according to ISO 2813 on plaques with dimensions 60×60×1 $mm^3$ machined from injection-molded plaques prepared at 220 °C according to ISO19069-2.

**Yellowness index**

The yellowness index was measured according to ASTM E313. The plaques used had dimension 60×60×2 $mm^3$ and were prepared at 220 °C according to ISO19069-2.

**Top load**

The compression test used to measure the rigidity of injection molded containers followed the method of standard test ASTM 2659-95 on a Zwick tensile machine operated at a velocity of 10 mm/min. Dimensions of the rectangular box (size 145×95×50 $mm^3$) and having wall thickness of 0.5 mm was used for the measurement of Top load (N) till containers crushed.

**Cycle time measurement**

The cycle time optimization was done using Netstal SynErgy 1200-600, 45-23D, cc286 injection molding apparatus with different molds for houseware container lid and houseware container box.

Screw diameter: 45 mm
Max cylinder volume: 286 cc
Tools used: houseware container lids (size = 145×95×10$mm^3$, thickness 0.5mm) and houseware container box (size = 145x95x50$mm^3$, thickness 0.5mm) molds.
Temperature: zone 1/ zone 2/zone 3/zone 4/zone 5/ feed zone: 220°C/220°C/220°C/220°C /220°C/190°C
Melt Temperature: 220°C
Mold Sprue Temperature: 200°C
Mold Temperature: 50°C

**Preparation of the Examples**

The compositions CE, IE1 and IE2 have been produced in a Borstar™-type two-step polymerization process starting in a prepolymerization reactor, followed by polymerization in a bulk-phase loop reactor, again followed by polymerization in a gas phase reactor, varying the molecular weight and ethylene content by appropriate hydrogen and comonomer feeds. The catalyst used in the polymerization process was Ziegler-Natta catalyst with triethyl-aluminium (TEAL) as co-catalyst and dicyclo pentyl dimethoxy silane (donor "D") as donor.

The catalyst has been produced as follows: First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl4 was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e. g. in patent publications EP 491 566, EP 591 224 and EP 586 390. The aluminium to donor ratio is indicated in table 1.

Before the Pre-polymerization for Examples IE1 and IE2, the catalyst was modified by prepolymerizing the catalyst with vinyl cyclohexane in an amount to achieve a concentration of 10 to 20 ppm poly(vinyl cyclohexane) (pVCH) in the final polymer. The respective process is described in EP 1 028 984, EP 1 183 307 and EP 2 960 279. The prepolymerisation with propylene was performed in a stirred tank reactor in liquid phase. Following a transfer to the loop reactor, the first copolymer fraction (A) was produced with the parameters in the respective part of table 1 under Loop reactor, then the polymer was again transferred to the gas phase reactor (GPR 1) and the second copolymer fraction (B) was produced with the parameters in the respective part of table 1.

**Table 1:** Polymerization conditions.

| | CE | IE1 | IE2 |
|---|---|---|---|
| **Pre-polymerization** | | | |
| TEAL/Ti (mol/mol) | | 225 | 225 |
| TEAL/Donor (mol/mol) | 7.8 | 7.8 | 7.8 |
| Temp. (°C) | 30 | 30 | 30 |
| Press. (kPa) | 5500 | 5500 | 5500 |
| Donor/$C_3$ (g/ton) | 40 | 20 | 20 |
| TEAL/$C_3$ flow (g/ton) | 130 | 135 | 135 |
| **Loop reactor** | | | |
| Temp. (°C) | 75 | 75 | 75 |
| Press. (kPa) | 5500 | 5500 | 5500 |
| $H_2/C_3$ (mol/kmol) | 20.0 | 24.5 | 23.0 |
| $C_2/C_3$ (mol/kmol) | 4 | 4 | 4 |
| Split (wt.-%) | 49 | 50 | 50 |
| $MFR_2$ (g/10min) | 62 | 85 | 75 |
| $C_2$ content (wt.-%) C2(PP1) | 0.80 | 0.90 | 0.90 |
| XS (wt.-%) | 2.5 | 2.5 | 2.5 |
| **GPR 1** | | | |
| Temp. (°C) | 85 | 85 | 85 |
| Press. (kPa) | 2150 | 2150 | 2150 |
| $H_2/C_3$ (mol/kmol) | 170 | 190 | 130 |
| $C_2/C_3$ (mol/kmol) | 9 | 10 | 10 |
| Split (wt.-%) | 51 | 50 | 50 |
| C2 content in GPR1 fraction | 0.80 | 1.50 | 1.50 |
| (wt.% - calculated) C2(PP2) | | | |
| C2(PP2) - C2 (PP1) (wt%) | 0 | 0.6 | 0.6 |
| **Polymer powder (R-PP)** | | | |
| $MFR_2$ (g/10min) | 62 | 85 | 75 |

(continued)

| Polymer powder (R-PP) | | | |
|---|---|---|---|
| C2 content (wt.-%) | 0.80 | 1.20 | 1.20 |
| XS (wt.-%) | 2.0 | 2.1 | 2.2 |
| 2,1-regio-defects | 0 | 0 | 0 |

An additive combination of Irganox 1010 (Pentaerythrityl-tetrakis(3-(3',5'-di-tert. butyl-4-hydroxyphenyl)-propionate, CAS-no. 6683-19-8), Irgafos 168 (Tris (2,4-di-t-butylphenyl) phosphate, CAS-no. 31570-04-4), Calcium stearate (supplied by Croda Polymer Additives, CAS-no. 1592-23-0) and GMS95Tris (Glyceryl Monostearate) was used to compound the obtained PP-powders, as seen in Table 2.

The comparative compositions CE1-3 were obtained by further compounding the CE PP-powder with BNT-Masterbatch (HC205TF, polypropylene homopolymer nucleated with pVCH) and either no further nucleating agent, NA21 (containing hydroxybis (2,4,8,10-tetra-tert. butyl-6-hydroxy-12H-dibenzo(d,g)(1.,3,2) dioxaphosphocin 6-oxidato) aluminium, CAS-no. 151841-65-5, commercially available from ADEKA Japan) or NA71 (containing 2,2' - methylene bis-(4,6-di-tert. butylphenyl) phosphate lithium salt, CAS-no. 85209-93-4, commercially available from ADEKA Japan).

The compositions IE1 and IE2 were obtained by compounding the PP-powders IE1 and IE2 with a further nucleating agent HPN600ei containing calcium salt of cis-1,2-cyclohexanedicarboxylic acid and zinc stearate (supplied by Milliken).

**Table 2:** Weight percentages of additives and PP-powder in the compositions.

| | CE1 | CE2 | CE3 | IE1 | IE2 |
|---|---|---|---|---|---|
| PP-powder | 97.715 | 97.690 | 97.690 | 99.780 | 99.840 |
| BNT-Masterbatch (MB) | 2.0 | 2.0 | 2.0 | - | - |
| Calcium Stearate | 0.063 | 0.063 | 0.063 | 0.032 | 0.032 |
| Irganox 1010 | 0.039 | 0.039 | 0.039 | 0.056 | 0.056 |
| Irgafos 168 | 0.078 | 0.078 | 0.078 | 0.056 | 0.056 |
| GMS95 | 0.105 | 0.105 | 0.105 | 0.060 | 0 |
| NA21 | 0 | 0.025 | 0 | 0 | 0 |
| NA71 | 0 | 0 | 0.025 | 0 | 0 |
| HPN600ei | 0 | 0 | 0 | 0.016 | 0.016 |

**Table 3:** Physical properties of the resulting compositions.

| | CE1 | IE1 | IE2 |
|---|---|---|---|
| $MFR_2$ (g/10min) | 62 | 85 | 75 |
| $C_2$ content (wt.%) | 0.80 | 1.20 | 1.20 |
| XS (wt.%) | 2.0 | 2.1 | 2.2 |
| $T_m$ (°C) | 156.0 | 157.2 | 156.9 |
| $T_c$ (°C) | 122.6 | 125.9 | 126.2 |
| Mn (g/mol) | 19900 | 18550 | 19350 |
| Mw (g/mol) | 144050 | 132150 | 136450 |
| MWD (Mw/Mn) | 7.2 | 7.1 | 7.05 |

DSC crystallization temperature was higher in IE1 and IE2, indicating faster crystallization than CE1. Both higher melting peak (Tm) as well as higher crystallization temperature (Tc) are reported for the inventive examples.

**Table 4:** Mechanical and optical properties of the inventive examples and comparative examples.

| Properties | CE1 | CE2 | CE3 | IE1 | IE2 |
|---|---|---|---|---|---|
| Tensile modulus (MPa) | 1780 | 1818 | 1800 | 1900 | 1870 |
| Tensile stress at yield (MPa) | 38 | 38.8 | 38.7 | 39.6 | 39.4 |
| Flexural modulus (MPa) | 1800 | 1834 | 1832 | 1930 | 1900 |
| Charpy notched impact strength 23°C (kJ/$m^2$) (NIS) | 2.2 | 2.2 | 2.2 | 2.1 | 2.1 |
| HDT (0.45 MPa) (°C) | 106.0 | 109.0 | 106.5 | 116.8 | 114.6 |
| Crush Properties - Top Load (N) | 654 | 662 | 660 | 682 | 675 |
| $\frac{Tensile\ modulus}{NIS}$ $(\frac{MPa\ m^2}{kJ})$ | 809 | 826 | 818 | 905 | 890 |
| **Opticals & Colour** | | | | | |
| Haze -1.0 mm test sample (%) | 74.6 | 59.2 | 61.2 | 54.0 | 52.4 |
| Haze -2.0 mm test sample (%) | 96.0 | 88.4 | 90.5 | 83.0 | 82.4 |
| Gloss at 60°- 1 mm thickness (GU) | 91 | 93 | 95 | 100 | 100 |
| Yellowness Index - 2 mm test sample | 5.6 | 5.1 | 5.3 | 4.4 | 3.8 |

Flexural modulus and Tensile properties of IE1 and IE2 are superior compared to CE1 and it has significant effect on the finished molded article (keeping the same Charpy NIS value). Accordingly, the top load results or load bearing capacity of injection molded containers is also higher, which will help the stackability of the molded articles. The inventive examples have superior balance of stiffness (tensile modulus) and Charpy impact (NIS), demonstrated by the bigger ratio of tensile modulus to the Charpy notched impact strength (NIS) compared to CE1-CE3. The mechanical properties of the inventive examples also advantageous if there is a need to hold the content such as food contained therein as well as having sufficient stiffness to be stacked. Finally, the materials can also withstand mechanical impact damage, which is frequently incurred by e.g. dropping the articles. In the field of thin-wall packaging and/or large parts in automotives, it is of great importance to have a well flowing material (high MFR) with high tensile modulus and good impact strength, i.e superior $\frac{Tensile\ modulus}{NIS}$ *ratio.*

IE1 and IE2 also have excellent clarity as pVCH (NU1) and HPN600ei (NU2) together provides faster growth of crystallites. Haze values of 1 mm or 2 mm molded specimen were also lower for inventive examples IE1 and IE2, and gloss value is also slightly higher. Improved clarity was observed in the inventive Examples with the combination of $C_2$ content of 1.2 wt.-%, pVCH (NU1) and HPN600ei (NU2). The obtained polypropylene compositions were molded into articles.

**Table 5**: Cycle time testing for the inventive and comparative examples.

| **Cycle time optimization with houseware container lids** (size = 145×95×10$mm^3$, thickness 0.5mm) | CE1 | IE1 | IE2 |
|---|---|---|---|
| Melt temperature, °C | 220 | 220 | 220 |
| Injection Speed set, mm/s | 100 | 100 | 100 |
| Injection pressure peak actual (bar) | 1077 | 1033 | 1048 |
| Holding pressure peak (bar) | 500 | 500 | 500 |
| Injection time (sec) | 0.20 | 0.20 | 0.20 |
| Cooling time+ hold on time (sec) | 2.30 | 1.90 | 1.95 |
| Ejector time (sec) | 0.19 | 0.19 | 0.19 |
| Mold closing and opening time (sec) | 1.41 | 1.40 | 1.40 |
| Total cycle time (sec) | **4.10** | **3.69** | **3.74** |

(continued)

| **Cycle time optimization with rectangular box** (size = 145x95x50mm$^3$, thickness 0.5mm) | **CE1** | **IE1** | **IE2** |
|---|---|---|---|
| Melt temperature, °C | 220 | 220 | 220 |
| Injection Speed set, mm/s | 160 | 160 | 160 |
| Injection pressure peak actual (bar) | 750 | 718 | 726 |
| Holding pressure peak (bar) | 700 | 600 | 600 |
| Injection time (sec) | 0.11 | 0.11 | 0.11 |
| Cooling time+ hold on time (sec) | 2.65 | 2.40 | 2.40 |
| Ejector time (sec) | 0.19 | 0.19 | 0.19 |
| Mold closing and opening time (sec) | 1.70 | 1.70 | 1.70 |
| Total cycle time (sec) | **4.65** | **4.40** | **4.40** |

Depending upon the molded article's shape and size, the optimized cycle time of the finished containers of inventive examples were better and may vary from 5 to 10% a thin wall packaging container or various automotive parts like car interior parts, engine casings, car exterior parts etc.

Below table 6 shows the clearly improved processability (flowability) demonstrated by Spiral Flow of 1 mm thick specimen measured at 220°C melt temperature (carried out five times and the average values are given) of the inventive and comparative examples.

**Table 6:** Flowability of inventive and comparative examples.

| **Spiral flow** | **CE1** | **IE1** | **IE2** |
|---|---|---|---|
| Spiral Flow (cm) at 1400 bar | 51.8 | 54.3 | 54.1 |
| Spiral Flow (cm) at 1000 bar | 42.7 | 44.9 | 45.0 |
| Spiral Flow (cm) at 600 bar | 31.4 | 33.0 | 33.0 |

The good flowability of the inventive examples alognwith suitable additives demonstrated to achieve a good processability in various manufacturing methods of articles, e.g. injection molding processes, thereby allowing the high production speed together with lower cycle time, required in this mass production market.

## Claims

**1.** An $\alpha$-nucleated propylene ethylene random copolymer composition, comprising:

a) a monophasic propylene ethylene random copolymer (R-PP) having

- an ethylene content (C2), as determined by $^{13}$C-NMR spectroscopy, in the range of 0.5 to 5.0 wt.-%, more preferably in the range of 0.6 to 4.0 wt.- %, most preferably in the range of 0.6 to 2.5 wt.-%, based on the total weight of the monophasic propylene ethylene random copolymer,
- a melt flow rate $MFR_2$ (230 °C) measured according to ISO 1133 in the range of 20 to 500 g/10min, preferably in the range of 30 to 300 g/10min, more preferably 35 to 200 g/10min; and

b) at least two nucleating agents (NU), wherein

- one of the at least two nucleating agents is a vinylcycloalkane polymer (NU1), preferably is poly(vinylcyclopentane) or poly(vinylcyclohexane) (pVCH), more preferably is poly(vinylcyclohexane) (pVCH), and
- the other of the at least two nucleating agents, (NU2), comprises the salt of a bridged or unbridged cyclohexane dicarboxylic acid represented by Formula (I-a) or (I-b):

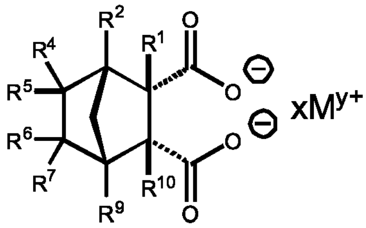 (I-a) 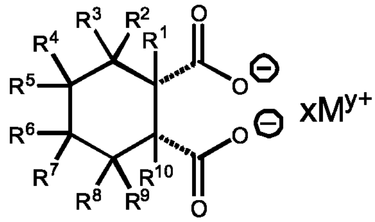 (I-b),

wherein x is either 1 or 2, y is either 1 or 2, x*y is 2, and wherein for y = 1, M is an alkali metal, and for y=2, M is an alkaline earth metal; and wherein $R^1$ to $R^{10}$ are independently a hydrogen atom, an alkyl group having 1 to 9 carbon atoms, a hydroxyl group, an alkoxy group having 1 to 9 carbon atoms, an amino group, an alkylamine group having 1 to 9 carbon atoms, a halogen atom, a phenyl group, or a group represented by the formula $R-(R'-O)_n-$, R being an alkyl group having 1 to 3 carbon atoms, R' being an alkylene group having 2 or 3 carbon atoms, and n being an integer of 1 to 4; and any two alkyl groups of $R^1$ to $R^{10}$ may be linked to each other, thereby forming a carbon ring having 3 to 6 carbon atoms.

**2.** The α-nucleated propylene ethylene random copolymer composition according to claim 1, wherein the monophasic propylene ethylene random copolymer (R-PP) has 2,1-regio-defects, measured by quantitative $^{13}$C-NMR, of less than 0.4 mol-%.

**3.** The α-nucleated propylene ethylene random copolymer composition according to any of the preceding claims, wherein the nucleating agent (NU2) comprises the salt of a bridged or unbridged cyclohexane dicarboxylic acid represented by Formula (I-a) or (I-b) in an amount of ≥ 50 wt.-%, based on the total weight of the nucleating agent (NU2); and/or wherein the salt of a bridged or unbridged cyclohexane dicarboxylic acid represented by Formula (I-a) or (I-b) is the calcium salt of cis-1,2-cyclohexanedicarboxylic acid.

**4.** The α-nucleated propylene ethylene random copolymer composition according to claim 1 or 2, wherein the monophasic propylene ethylene random copolymer (R-PP) is a multimodal, preferably bimodal, propylene ethylene random copolymer (R-PP) in view of the ethylene content and comprises at least two propylene ethylene random copolymer fractions (A) and (B), wherein

- the combined amount of the two propylene ethylene random copolymer fractions (A) and (B) is at least 90 wt.-%, based on the total weight of the propylene ethylene random copolymer (R-PP),
- the ethylene content of the first propylene ethylene random copolymer fraction (A) is in the range of 0.1 to 1.5 wt.-%, more preferably in the range of 0.3 to 1.2 wt.-%, the ethylene content of the second propylene copolymer fraction (B) is in the range of 0.8 to 2.5 wt.-%, more preferably in the range of 1.0 to 2.0 wt.-%, and the ethylene content of the first propylene ethylene random copolymer fraction (A) is lower than the ethylene content of the second propylene copolymer fraction (B), preferably the ethylene content of the first propylene ethylene random copolymer fraction (A) is at least 0.2 wt.- %, more preferably 0.2 to 2.0 wt.-%, yet more preferably 0.3 to 1.5 wt.-%, lower than the ethylene content of the second propylene copolymer fraction (B) and
- wherein the weight ratio between the first propylene copolymer fraction (A) and the second propylene copolymer fraction (B) is 40:60 to 60:40.

**5.** The α-nucleated propylene ethylene random copolymer composition according to any of the preceding claims, wherein the propylene ethylene random copolymer (R-PP) is non-visbroken, preferably is a reactor-made propylene ethylene random copolymer; and/or does not contain peroxide(s) or decomposition products of peroxide(s).

**6.** The α-nucleated propylene ethylene random copolymer composition according to any of the preceding claims, wherein the propylene ethylene random copolymer (R-PP) has

- a molecular weight distribution (MWD) determined by gel permeation chromatography according to ISO 16014-4:2003 and ASTM D 6474-99, of at least 5.0, preferably in the range of 6.0 to 10.0; and/or
- a xylene soluble content (XS), determined at 25 °C according to ISO 16152, of less than 4.0 wt.-%, preferably in the range from 0.5 to 3.5 wt.-%, more preferably in the range from 1.0 to 3.0 wt.-%, most preferably in the range from 1.5 to 2.7 wt.-%.

**7.** The α-nucleated propylene ethylene random copolymer composition according to any one of the preceding claims,

wherein

- the amount of the vinylcycloalkane polymer (NU1) is in the range of 0.1 to 2000 ppm, preferably 1.0 to 1000 ppm, based on the total weight of the propylene ethylene random copolymer composition, and/or
- the amount of the nucleating agent comprising the salt of a bridged or unbridged cyclohexane dicarboxylic acid represented by Formula (I-a) or (I-b) (NU2) is in the range of 20 to 1000 ppm, preferably 50 to 500 ppm, based on the total weight of the propylene ethylene random copolymer composition.

**8.** The $\alpha$-nucleated propylene ethylene random copolymer composition according to any one of the preceding claims, wherein the composition does not comprise further nucleating agents other than vinylcycloalkane polymer (NU1) and the nucleating agent comprising the salt of a bridged or unbridged cyclohexane dicarboxylic acid represented by Formula (I-a) or (I-b) (NU2).

**9.** The $\alpha$-nucleated propylene ethylene random copolymer composition according to any one of the preceding claims, wherein the amount of the propylene ethylene random copolymer (R-PP) is more than 85 wt.-%, preferably in the range of 90 to 99.9 wt.-%, more preferably in the range of 95 to 99.9 wt.-%, based on the total weight of the propylene ethylene random copolymer composition.

**10.** The $\alpha$-nucleated propylene ethylene random copolymer composition according to any one of the preceding claims, wherein the combined amount of the propylene ethylene random copolymer (R-PP) and the at least two nucleating agents (NU) is more than 90 wt.-%, preferably in the range of 95.0 to 99.9 wt.-%, more preferably in the range of 97.0 to 99.9 wt.-%, based on the total weight of the propylene ethylene random copolymer composition.

**11.** The $\alpha$-nucleated propylene ethylene random copolymer composition according to any of the preceding claims, wherein the composition has

- a melt flow rate $MFR_2$ (230 °C) measured according to ISO 1133 in the range of 20 to 500 g/10min, preferably in the range of 30 to 300 g/10min; and
- a xylene soluble content (XS), determined at 25 °C according to ISO 16152, of less than 4 wt.-%.

**12.** The $\alpha$-nucleated propylene ethylene random copolymer composition according to any of the preceding claims, wherein the composition has

- a crystallization temperature Tc measured by differential scanning calorimetry (DSC) of at least 123 °C, preferably in the range of 124 °C to 135 °C; more preferably 125 °C to 130 °C and/or
- a melting Temperature Tm measured by differential scanning calorimetry (DSC) of at least 153 °C, more preferably in the range of 153 °C to 170 °C; and/or
- a heat deflection Temperature (HDT), measured on injection molded bar test specimens of 80×10×4 $mm^3$ prepared in accordance with ISO 19069-2 using a melt temperature of 200 °C, of more than 110°C, preferably in the range of 110 °C to 130 °C, most preferably in the range of 112 °C to 125 °C.

**13.** The $\alpha$-nucleated propylene ethylene random copolymer composition according to any of the preceding claims, wherein the composition has

- a tensile modulus, determined according to ISO 527-1,-2 at 1 mm/min and 23°C, of more than 1800 MPa, preferably in the range of 1800 MPa to 2200 MPa; and
- a ratio of the tensile modulus to the Charpy notched impact strength (NIS) at 23 °C, determined according to ISO 179 using 80×10×4 $mm^3$ test bars injection-molded in line with ISO 19069-2, fulfilling the equation (a)

$$\frac{Tensile\ modulus}{NIS} \geq 850\,\frac{MPa\ m^2}{kJ} \qquad (a).$$

**14.** The $\alpha$-nucleated propylene ethylene random copolymer composition according to any of the preceding claims, wherein the composition has

- a haze value determined according to ASTM D1003-07 on plaques with dimensions 60×60×1 $mm^3$ of less than 70%, preferably less than 65%; and/or

- a yellowness index, measured according to ASTM E313 on plaques with dimensions $60\times60\times2$ mm$^3$ of less than or equal to 6.0, preferably in the range of 0.1 to less than 6.0, more preferably 0.1 to 5.5.

**15.** An injection molded article comprising, preferably consisting of the $\alpha$-nucleated propylene ethylene random copolymer composition according to any of claims 1 to 14, wherein the article is preferably a thin wall packaging container or automotive parts like car interior parts, engine casings or car exterior parts.

**Patentansprüche**

**1.** Eine Zusammensetzung eines $\alpha$-nukleierten statistischen Propylen-Ethylen-Copolymers, umfassend:

a) ein einphasiges statistisches Propylen-Ethylen-Copolymer (R-PP) mit

- einen Ethylengehalt (C2), bestimmt durch $^{13}$C-NMR-Spektroskopie, im Bereich von 0,5 bis 5,0 Gew.-%, mehr bevorzugt im Bereich von 0,6 bis 4,0 Gew.-%, am meisten bevorzugt im Bereich von 0,6 bis 2,5 Gew.-%, bezogen auf das Gesamtgewicht des einphasigen statistischen Propylen-Ethylen-Copolymers,
- einer Schmelzflussrate $MFR_2$ (230 °C), gemessen nach ISO 1133, im Bereich von 20 bis 500 g/10 min, bevorzugt im Bereich von 30 bis 300 g/10 min, mehr bevorzugt im Bereich von 35 bis 200 g/10 min; und

b) mindestens zwei Nukleierungsmittel (NU), wobei

- eines der mindestens zwei Nukleierungsmittel ein Vinylcycloalkan-Polymer (NU1) ist, bevorzugt Poly(vinylcyclopentan) oder Poly(vinylcyclohexan) (pVCH) ist, mehr bevorzugt Poly(vinylcyclohexan) (pVCH) ist, und
- das andere der mindestens zwei Nukleierungsmittel (NU2) das Salz einer verbrückten oder unverbrückten Cyclohexandicarbonsäure umfasst, die durch die Formel (I-a) oder (I-b) dargestellt wird:

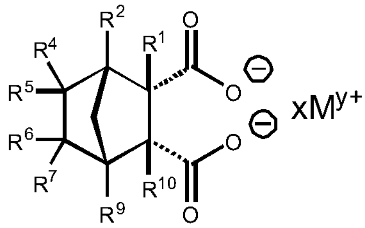
(I-a)
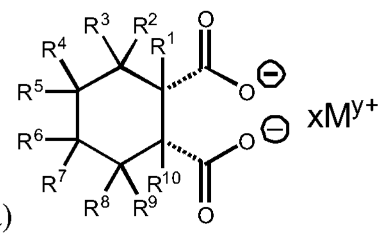
(I-b),

wobei x entweder 1 oder 2 ist, y entweder 1 oder 2 ist, x*y 2 ist, und wobei für y = 1 M ein Alkalimetall ist und für y = 2 M ein Erdalkalimetall ist; und wobei $R^1$ bis $R^{10}$ unabhängig voneinander ein Wasserstoffatom sind, eine Alkylgruppe mit 1 bis 9 Kohlenstoffatomen, eine Hydroxylgruppe, eine Alkoxygruppe mit 1 bis 9 Kohlenstoffatomen, eine Aminogruppe, eine Alkylaminogruppe mit 1 bis 9 Kohlenstoffatomen, ein Halogenatom, eine Phenylgruppe oder eine durch die Formel $R\text{-}(R'\text{-}O)_n\text{-}$ dargestellte gruppe ist, wobei R eine Alkylgruppe mit 1 bis 3 Kohlenstoffatomen ist, R' eine Alkylengruppe mit 2 oder 3 Kohlenstoffatomen ist und n eine ganze Zahl von 1 bis 4 ist; und wobei beliebige zwei Alkylgruppen von $R^1$ bis $R^{10}$ miteinander verbunden sein können, wodurch ein Kohlenstoffring mit 3 bis 6 Kohlenstoffatomen gebildet wird.

**2.** Die Zusammensetzung eines $\alpha$-nukleierten statistischen Propylen-Ethylen-Copolymers gemäß Anspruch 1, wobei das einphasige statistische Propylen-Ethylen-Copolymer (R-PP) 2,1-Regio-Defekte aufweist, gemessen mittels quantitativer $^{13}$C-NMR, von weniger als 0,4 Mol-%.

**3.** Die Zusammensetzung eines $\alpha$-nukleierten statistischen Propylen-Ethylen-Copolymers gemäß einem der vorstehenden Ansprüche, wobei das Nukleierungsmittel (NU2) das Salz einer verbrückten oder unverbrückten Cyclohexandicarbonsäure der Formel (I-a) oder (I-b) in einer Menge von $\geq$ 50 Gew.-%, bezogen auf das Gesamtgewicht des Nukleierungsmittels (NU2), umfasst; und/oder wobei das Salz einer verbrückten oder unverbrückten Cyclohexandicarbonsäure, dargestellt durch die Formel (I-a) oder (I-b), das Calciumsalz der cis-1,2-Cyclohexandicarbonsäure ist.

**4.** Die Zusammensetzung eines $\alpha$-nukleierten statistischen Propylen-Ethylen-Copolymers gemäß Anspruch 1 oder 2, wobei das einphasige statistische Propylen-Ethylen-Copolymer (R-PP) hinsichtlich des Ethylengehalts ein multimodales, vorzugsweise bimodales statistisches Propylen-Ethylen-Copolymer (R-PP) ist und mindestens zwei Fraktionen (A) und (B) eines statistischen Propylen-Ethylen-Copolymers umfasst, wobei

- die Gesamtmenge der beiden Fraktionen (A) und (B) eines statistischen Propylen-Ethylen-Copolymers mindestens 90 Gew.-%, bezogen auf das Gesamtgewicht des statistischen Propylen-Ethylen-Copolymers (R-PP), beträgt,
- der Ethylengehalt der ersten Fraktion (A) des statistischen Propylen-Ethylen-Copolymers im Bereich von 0,1 bis 1,5 Gew.-%, mehr bevorzugt im Bereich von 0,3 bis 1,2 Gew.-%, liegt, der Ethylengehalt der zweiten Fraktion (B) des Propylen-Copolymers im Bereich von 0,8 bis 2,5 Gew.-%, mehr bevorzugt im Bereich von 1,0 bis 2,0 Gew.-%, liegt, und der Ethylengehalt der ersten Fraktion (A) des statistischen Propylen-Ethylen-Copolymers niedriger ist als der Ethylengehalt der zweiten Fraktion (B) des Propylen-Copolymers, vorzugsweise ist der Ethylengehalt der ersten Fraktion (A) des statistischen Propylen-Ethylen-Copolymers mindestens 0,2 Gew.-%, noch bevorzugter 0,2 bis 2,0 Gew.-%, noch bevorzugter 0,3 bis 1,5 Gew.-%, niedriger als der Ethylengehalt der zweiten Fraktion (B) des Propylen-Copolymers und
- wobei das Gewichtsverhältnis zwischen der ersten Fraktion (A) des Propylen-Copolymers und der zweiten Fraktion (B) des Propylen-Copolymers 40:60 bis 60:40 beträgt.

**5.** Die Zusammensetzung eines $\alpha$-nukleierten statistischen Propylen-Ethylen-Copolymers gemäß einem der vorstehenden Ansprüche, wobei das statistische Propylen-Ethylen-Copolymer (R-PP) nicht viskositätsgebrochenen ist, vorzugsweise ein reaktorgefertigtes statistisches Propylen-Ethylen-Copolymer ist; und/oder kein(e) Peroxid(e) oder Zersetzungsprodukte von Peroxid(en) enthält.

**6.** Die Zusammensetzung eines $\alpha$-nukleierten statistischen Propylen-Ethylen-Copolymers gemäß einem der vorstehenden Ansprüche, wobei das statistische Propylen-Ethylen-Copolymer (R-PP)

- eine Molekulargewichtsverteilung (MWD), bestimmt durch Gelpermeationschromatographie gemäß ISO 16014-4:2003 und ASTM D 6474-99, von mindestens 5,0, vorzugsweise im Bereich von 6,0 bis 10,0 aufweist; und/oder
- einen in Xylol löslichen Anteil (XS), bestimmt bei 25 °C gemäß ISO 16152, von weniger als 4,0 Gew.-%, vorzugsweise im Bereich von 0,5 bis 3,5 Gew.- %, noch bevorzugter im Bereich von 1,0 bis 3,0 Gew.-%, am meisten bevorzugt im Bereich von 1,5 bis 2,7 Gew.-% aufweist.

**7.** Die Zusammensetzung eines $\alpha$-nukleierten statistischen Propylen-Ethylen-Copolymers gemäß einem der vorstehenden Ansprüche, wobei

- die Menge des Vinylcycloalkan-Polymers (NU1) im Bereich von 0,1 bis 2000 ppm, vorzugsweise 1,0 bis 1000 ppm, bezogen auf das Gesamtgewicht der Zusammensetzung des statistischen Propylen-Ethylen-Copolymers, liegt und/oder
- die Menge des Nukleierungsmittels, das das Salz einer verbrückten oder unverbrückten Cyclohexandicarbonsäure der Formel (I-a) oder (I-b) (NU2) umfasst, im Bereich von 20 bis 1000 ppm, vorzugsweise 50 bis 500 ppm, bezogen auf das Gesamtgewicht der Zusammensetzung des statistischen Propylen-Ethylen-Copolymers, liegt.

**8.** Die Zusammensetzung eines $\alpha$-nukleierten statistischen Propylen-Ethylen-Copolymers gemäß einem der vorstehenden Ansprüche, wobei die Zusammensetzung keine weiteren Nukleierungsmittel außer Vinylcycloalkan-Polymer (NU1) und dem Nukleierungsmittel, das das Salz einer verbrückten oder unverbrückten Cyclohexandicarbonsäure der Formel (I-a) oder (I-b) (NU2) umfasst, enthält.

**9.** Die Zusammensetzung eines $\alpha$-nukleierten statistischen Propylen-Ethylen-Copolymers gemäß einem der vorstehenden Ansprüche, wobei die Menge des statistischen Propylen-Ethylen-Copolymers (R-PP) mehr als 85 Gew.-% ist, vorzugsweise im Bereich von 90 bis 99,9 Gew.-%, noch bevorzugter im Bereich von 95 bis 99,9 Gew.-%, bezogen auf das Gesamtgewicht der Zusammensetzung des statistischen Propylen-Ethylen-Copolymers.

**10.** Die Zusammensetzung eines $\alpha$-nukleierten statistischen Propylen-Ethylen-Copolymers gemäß einem der vorstehenden Ansprüche, wobei die Gesamtmenge des statistischen Propylen-Ethylen-Copolymers (R-PP) und der mindestens zwei Nukleierungsmittel (NU) mehr als 90 Gew.-% ist, vorzugsweise im Bereich von 95,0 bis 99,9 Gew.-%, mehr bevorzugt im Bereich von 97,0 bis 99,9 Gew.-%, bezogen auf das Gesamtgewicht der Zusammensetzung des statistischen Propylen-Ethylen-Copolymers.

**11.** Die Zusammensetzung eines α-nukleierten statistischen Propylen-Ethylen-Copolymers gemäß einem der vorstehenden Ansprüche, wobei die Zusammensetzung

- eine Schmelzflussrate $MFR_2$ (230 °C), gemessen nach ISO 1133, im Bereich von 20 bis 500 g/10 min aufweist, vorzugsweise im Bereich von 30 bis 300 g/10 min; und
- einen in Xylol löslichen Anteil (XS), bestimmt bei 25 °C gemäß ISO 16152, von weniger als 4 Gew.-% aufweist.

**12.** Die Zusammensetzung eines α-nukleierten statistischen Propylen-Ethylen-Copolymers gemäß einem der vorstehenden Ansprüche, wobei die Zusammensetzung

- eine mittels Differential-Scanning-Kalorimetrie (DSC) gemessene Kristallisationstemperatur Tc von mindestens 123 °C aufweist, vorzugsweise im Bereich von 124 °C bis 135 °C; noch bevorzugter von 125 °C bis 130 °C und/oder
- eine mittels Differential-Scanning-Kalorimetrie (DSC) gemessene Schmelztemperatur Tm von mindestens 153 °C, vorzugsweise im Bereich von 153 °C bis 170 °C aufweist; und/oder
- eine Wärmeformbeständigkeitstemperatur (HDT), gemessen an spritzgegossenen Stabproben von 80 × 10 × 4 $mm^3$, hergestellt gemäß ISO 19069-2 unter Verwendung einer Schmelztemperatur von 200 °C, von mehr als 110 °C aufweist, vorzugsweise im Bereich von 110 °C bis 130 °C, am bevorzugtesten im Bereich von 112 °C bis 125 °C.

**13.** Die Zusammensetzung eines α-nukleierten statistischen Propylen-Ethylen-Copolymers gemäß einem der vorstehenden Ansprüche, wobei die Zusammensetzung

- einen Zugmodul, bestimmt gemäß ISO 527-1, -2 bei 1 mm/min und 23 °C, von mehr als 1800 MPa aufweist, vorzugsweise im Bereich von 1800 MPa bis 2200 MPa; und
- ein Verhältnis des Zugmoduls zur Charpy-Kerbschlagzähigkeit (NIS) bei 23 °C, bestimmt gemäß ISO 179 unter Verwendung von 80 × 10 × 4 $mm^3$ Prüfstäben, 'die gemäß ISO 19069-2 spritzgegossen wurden, aufweist, das die Gleichung (a) erfüllt

$$\frac{Tensile\ modulus}{NIS} \geq 850\,\frac{MPa\ m^2}{kJ} \qquad (a).$$

**14.** Die Zusammensetzung eines α-nukleierten statistischen Propylen-Ethylen-Copolymers gemäß einem der vorstehenden Ansprüche, wobei die Zusammensetzung

- einen Trübungswert, bestimmt gemäß ASTM D1003-07 an Platten mit den Abmessungen 60 × 60 × 1 $mm^3$, von weniger als 70 % aufweist, vorzugsweise weniger als 65 %; und/oder
- einen Gelbindex, gemessen gemäß ASTM E313 an Platten mit den Abmessungen 60 × 60 × 2 $mm^3$, von weniger als oder gleich 6,0 aufweist, vorzugsweise im Bereich von 0,1 bis weniger als 6,0, noch bevorzugter von 0,1 bis 5,5.

**15.** Ein Spritzgussformteil, das die Zusammensetzung eines α-nukleierten statistischen Propylen-Ethylen-Copolymers gemäß einem der Ansprüche 1 bis 14 umfasst oder vorzugsweise daraus besteht, wobei das Formteil vorzugsweise ein dünnwandiger Verpackungsbehälter ist oder Automobilteile wie Fahrzeuginnenausstattungsteile, Motorgehäuse oder Fahrzeugaußenteile ist.

**Revendications**

**1.** Composition de copolymère aléatoire d'éthylène et de propylène α-nucléé, comprenant :

a) un copolymère aléatoire d'éthylène et de propylène (R-PP) monophasique ayant

- une teneur en éthylène (C2), telle que déterminée par spectroscopie RMN du $^{13}C$, dans la plage de 0,5 à 5,0 % en poids, de manière davantage préférée dans la plage de 0,6 à 4,0 % en poids, de manière préférée entre toutes dans la plage de 0,6 à 2,5 % en poids, sur la base du poids total du copolymère aléatoire d'éthylène et de propylène monophasique,

- un indice de fluidité à chaud $MFR_2$ (230 °C) mesuré selon l'ISO 1133 dans la plage de 20 à 500 g/10 min, de préférence dans la plage de 30 à 300 g/10 min, de manière davantage préférée 35 à 200 g/10 min ; et

b) au moins deux agents de nucléation (NU), dans laquelle

- l'un des au moins deux agents de nucléation est un polymère de vinylcycloalcane (NU1), de préférence est le poly(vinylcyclopentane) ou poly(vinylcyclohexane) (pVCH), de manière davantage préférée est le poly(vinylcyclohexane) (pVCH), et
- l'autre des au moins deux agents de nucléation, (NU2), comprend le sel d'un acide cyclohexane dicarboxylique ponté ou non ponté représenté par la formule (I-a) ou (I-b) :

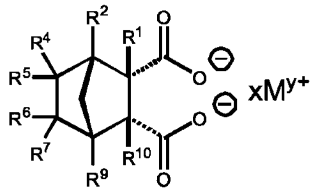
(I-a)
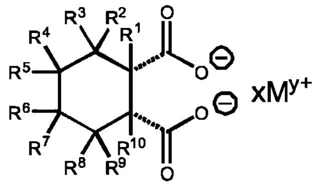
(I-b)

dans laquelle x est soit 1 soit 2, y est soit 1 soit 2, x*y est 2, et dans laquelle pour y = 1, M est un métal alcalin, et pour y = 2, M est un métal alcalino-terreux ; et dans laquelle $R^1$ à $R^{10}$ sont indépendamment un atome d'hydrogène, un groupe alkyle ayant 1 à 9 atomes de carbone, un groupe hydroxyle, un groupe alkoxy ayant 1 à 9 atomes de carbone, un groupe amino, un groupe alkylamine ayant 1 à 9 atomes de carbone, un atome d'halogène, un groupe phényle, ou un groupe représenté par la formule $R-(R'-O)_n-$, R étant un groupe alkyle ayant 1 à 3 atomes de carbone, R' étant un groupe alkylène ayant 2 ou 3 atomes de carbone, et n étant un entier de 1 à 4 ; et deux groupes alkyles de $R^1$ à $R^{10}$ peuvent être liés entre eux, formant ainsi un cycle carboné ayant 3 à 6 atomes de carbone.

**2.** Composition de copolymère aléatoire d'éthylène et de propylène $\alpha$-nucléé selon la revendication 1, dans laquelle le copolymère aléatoire d'éthylène et de propylène (R-PP) monophasique a des régio-défauts 2,1, mesurés par RMN du $^{13}C$ quantitative, de moins de 0,4 % en moles.

**3.** Composition de copolymère aléatoire d'éthylène et de propylène $\alpha$-nucléé selon l'une des revendications précédentes, dans laquelle l'agent de nucléation (NU2) comprend le sel d'un acide cyclohexane dicarboxylique ponté ou non ponté représenté par la formule (I-a) ou (I-b) en une quantité de $\geq$ 50 % en poids, sur la base du poids total de l'agent de nucléation (NU2) ; et/ou dans laquelle le sel d'un acide cyclohexane dicarboxylique ponté ou non ponté représenté par la formule (I-a) ou (I-b) est le sel de calcium d'acide cis-1,2-cyclohexanedicarboxylique.

**4.** Composition de copolymère aléatoire d'éthylène et de propylène $\alpha$-nucléé selon la revendication 1 ou 2, dans laquelle le copolymère aléatoire d'éthylène et de propylène (R-PP) monophasique est un copolymère aléatoire d'éthylène et de propylène (R-PP) multimodal, de préférence bimodal, du point de vue de la teneur en éthylène et comprend au moins deux fractions de copolymère aléatoire d'éthylène et de propylène (A) et (B), dans laquelle

- la quantité combinée des deux fractions de copolymère aléatoire d'éthylène et de propylène (A) et (B) est d'au moins 90 % en poids, sur la base du poids total du copolymère aléatoire d'éthylène et de propylène (R-PP),
- la teneur en éthylène de la première fraction de copolymère aléatoire d'éthylène et de propylène (A) est dans la plage de 0,1 à 1,5 % en poids, de manière davantage préférée dans la plage de 0,3 à 1,2 % en poids, la teneur en éthylène de la seconde fraction de copolymère de propylène (B) est dans la plage de 0,8 à 2,5 % en poids, de manière davantage préférée dans la plage de 1,0 à 2,0 % en poids, et la teneur en éthylène de la première fraction de copolymère aléatoire d'éthylène et de propylène (A) est inférieure à la teneur en éthylène de la seconde fraction de copolymère de propylène (B), de préférence la teneur en éthylène de la première fraction de copolymère aléatoire d'éthylène et de propylène (A) est d'au moins 0,2 % en poids, de manière davantage préférée 0,2 à 2,0 % en poids, encore de manière davantage préférée 0,3 à 1,5 % en poids, inférieure à la teneur en éthylène de la seconde fraction de copolymère de propylène (B) et
- dans laquelle le rapport pondéral entre la première fraction de copolymère de propylène (A) et la seconde fraction de copolymère de propylène (B) est 40:60 à 60:40.

**5.** Composition de copolymère aléatoire d'éthylène et de propylène $\alpha$-nucléé selon l'une des revendications précédentes, dans laquelle le copolymère aléatoire d'éthylène et de propylène (R-PP) est non viscoréduit, est de préférence un copolymère aléatoire d'éthylène et de propylène fabriqué en réacteur ; et/ou ne contient pas de peroxyde(s) ou de produits de décomposition de peroxyde (s) .

**6.** Composition de copolymère aléatoire d'éthylène et de propylène $\alpha$-nucléé selon l'une des revendications précédentes, dans laquelle le copolymère aléatoire d'éthylène et de propylène (R-PP) a

- une distribution de poids moléculaire (MWD) déterminée par chromatographie par perméation de gel selon l'ISO 16014-4:2003 et l'ASTM D 6474-99, d'au moins 5,0, de préférence dans la plage de 6,0 à 10,0 ; et/ou
- une teneur en xylène soluble (XS), déterminée à 25 °C selon l'ISO 16152, de moins de 4,0 % en poids, de préférence dans la plage de 0,5 à 3,5 % en poids, de manière davantage préférée dans la plage de 1,0 à 3,0 % en poids, de manière préférée entre toutes dans la plage de 1,5 à 2,7 % en poids.

**7.** Composition de copolymère aléatoire d'éthylène et de propylène $\alpha$-nucléé selon l'une des revendications précédentes, dans laquelle

- la quantité du polymère de vinylcycloalcane (NU1) est dans la plage de 0,1 à 2000 ppm, de préférence 1,0 à 1000 ppm, sur la base du poids total de la composition de copolymère aléatoire d'éthylène et de propylène, et/ou
- la quantité de l'agent de nucléation comprenant le sel d'un acide cyclohexane dicarboxylique ponté ou non ponté représenté par la formule (I-a) ou (I-b) (NU2) est dans la plage de 20 à 1000 ppm, de préférence 50 à 500 ppm, sur la base du poids total de la composition de copolymère aléatoire d'éthylène et de propylène.

**8.** Composition de copolymère aléatoire d'éthylène et de propylène $\alpha$-nucléé selon l'une des revendications précédentes, dans laquelle la composition ne comprend pas d'autres agents de nucléation que le polymère vinylcycloalcane (NU1) et l'agent de nucléation comprenant le sel d'un acide cyclohexane dicarboxylique ponté ou non ponté représenté par la formule (I-a) ou (I-b) (NU2).

**9.** Composition de copolymère aléatoire d'éthylène et de propylène $\alpha$-nucléé selon l'une des revendications précédentes, dans laquelle la quantité du copolymère aléatoire d'éthylène et de propylène (R-PP) est supérieure à 85 % en poids, de préférence dans la plage de 90 à 99,9 % en poids, de manière davantage préférée dans la plage de 95 à 99,9 % en poids, sur la base du poids total de la composition de copolymère aléatoire d'éthylène et de propylène.

**10.** Composition de copolymère aléatoire d'éthylène et de propylène $\alpha$-nucléé selon l'une des revendications précédentes, dans laquelle la quantité combinée du copolymère aléatoire d'éthylène et de propylène (R-PP) et des au moins deux agents de nucléation (NU) est supérieure à 90 % en poids, de préférence dans la plage de 95,0 à 99,9 % en poids, de manière davantage préférée dans la plage de 97,0 à 99,9 % en poids, sur la base du poids total de la composition de copolymère aléatoire d'éthylène et de propylène.

**11.** Composition de copolymère aléatoire d'éthylène et de propylène $\alpha$-nucléé selon l'une des revendications précédentes, dans laquelle la composition a

- un indice de fluidité à chaud $MFR_2$ (230 °C) mesuré selon l'ISO 1133 dans la plage de 20 à 500 g/10 min, de préférence dans la plage de 30 à 300 g/10 min ; et
- une teneur en xylène soluble (XS), déterminée à 25 °C selon l'ISO 16152, de moins de 4 % en poids.

**12.** Composition de copolymère aléatoire d'éthylène et de propylène $\alpha$-nucléé selon l'une des revendications précédentes, dans laquelle la composition a

- une température de cristallisation Tc mesurée par calorimétrie différentielle à balayage (DSC) d'au moins 123 °C, de préférence dans la plage de 124 °C à 135 °C ; de manière davantage préférée 125 °C à 130 °C et/ou
- une température de fusion Tm mesurée par calorimétrie différentielle à balayage (DSC) d'au moins 153 °C, de manière davantage préférée dans la plage de 153 °C à 170 °C ; et/ou
- une température de déflexion thermique (HDT), mesurée sur des échantillons de barre moulés par injection de $80 \times 10 \times 4$ $mm^3$ préparés conformément à l'ISO 19069-2 en utilisant une température de fusion de 200 °C, de plus de 110 °C, de préférence dans la plage de 110 °C à 130 °C, et de manière préférée entre toutes dans la plage de 112 °C à 125 °C.

**13.** Composition de copolymère aléatoire d'éthylène et de propylène $\alpha$-nucléé selon l'une des revendications précédentes, dans laquelle la composition a

- un module d'élasticité en traction, déterminé selon l'ISO 527-1,-2 à 1 mm/min et 23 °C, de plus de 1800 MPa, de préférence dans la plage de 1800 MPa à 2200 MPa ; et
- un rapport du module d'élasticité en traction à la résistance aux chocs sur éprouvette entaillée Charpy (NIS) à 23 °C, déterminé selon l'ISO 179 à l'aide de barres d'essai de 80×10×4 $mm^3$ moulées par injection conformément à l'ISO 19069-2, satisfaisant à l'équation (a)

$$\frac{\textit{Module d'élasticité en traction}}{NIS} \geq 850 \frac{MPa\, m^2}{kJ} \quad (a).$$

**14.** Composition de copolymère aléatoire d'éthylène et de propylène $\alpha$-nucléé selon l'une des revendications précédentes, dans laquelle la composition a

- une valeur de voile déterminée selon l'ASTM D1003-07 sur des plaques avec des dimensions 60×60×1 $mm^3$ de moins de 70 %, de préférence de moins de 65 % ; et/ou
- un indice de jaunissement, mesuré selon l'ASTM E313 sur des plaques avec des dimensions 60×60×2 $mm^3$ de moins de ou égales à 6,0, de préférence dans la plage de 0,1 à moins de 6,0, de manière davantage préférée 0,1 à 5,5.

**15.** Article moulé par injection comprenant, de préférence consistant en la composition de copolymère aléatoire d'éthylène et de propylène $\alpha$-nucléé selon l'une des revendications 1 à 14, dans lequel l'article est de préférence un récipient d'emballage à paroi mince ou des pièces automobiles telles que des pièces intérieures de voiture, des carters de moteur ou des pièces extérieures de voiture.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0316187 A2
- WO 9924479 A
- EP 2960279 A1
- EP 1028984 A
- EP 1183307 A
- EP 2960279 A
- US 5234879 A
- WO 9219653 A
- WO 9219658 A
- WO 9933843 A
- EP 0887379 A1
- WO 9212182 A
- EP 491566 A
- EP 591224 A
- EP 586390 A


### Non-patent literature cited in the description


- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1950, vol. 17, 1984
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **WANG, W-J.** ; **ZHU, S.** 33. *Macromolecules*, 2000, 1157
- **KAKUGO, M.** ; **NAITO, Y.** ; **MIZUNUMA, K.** ; **MIYATAKE, T.** *Macromolecules*, 1982, vol. 15, 1150
- *CHEMICAL ABSTRACTS*, 6683-19-8
- *CHEMICAL ABSTRACTS*, 31570-04-4
- *CHEMICAL ABSTRACTS*, 1592-23-0
- *CHEMICAL ABSTRACTS*, 151841-65-5
- *CHEMICAL ABSTRACTS*, 85209-93-4